# EUROPEAN PATENT APPLICATION

(11) **EP 4 620 700 A1**
(43) Date of publication of application: **24.09.2025**
(21) Application number: 25165095.8
(22) Date of filing: 20.03.2025
(51) Int. Cl.: B60B 25/00

(54) **IMPROVED MULTI-PART WHEEL**

(30) Priority: 20.03.2024 SE 2430139
(71) Applicant: Eovidar AB, 232 35 Arlöv (SE)
(72) Inventor: Wettermark, Fredrik, 232 35 Arlöv (SE); Flis, Micha, 232 35 Arlöv (SE)
(74) Representative: Basck Limited

(57) **Abstract**

A multi-part wheel 10 comprising a curb-side rim part 11 and a car-side rim part 12, wherein the curb-side rim part 11 comprises an outer rim-base portion 14, and the car-side rim part 12 comprises an inner rim-base portion 15 and a center part 13.

## Description

### TECHNICAL FIELD

The present disclosure relates generally to an improved two-part wheel, and in particular to a two-part wheel for land-based vehicles, such as cars.

### BACKGROUND

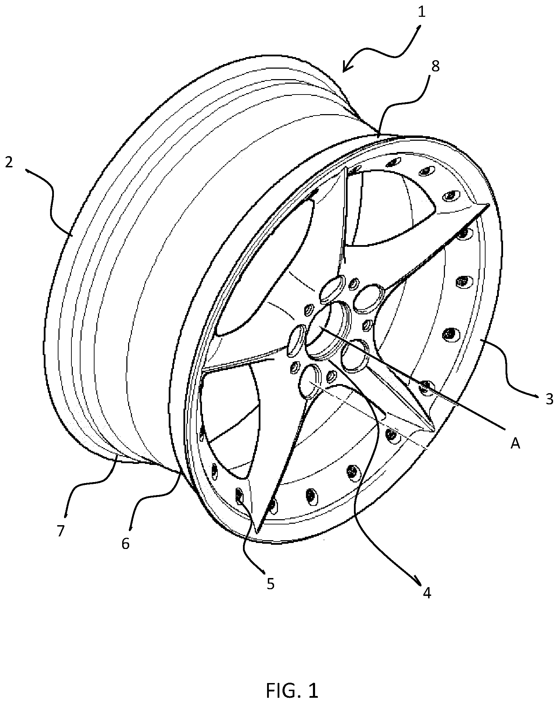

Two-part wheels, also referred to as two-piece wheels, are available in many formats for vehicles, such as cars, trucks, lorries, busses, vans (all considered to be cars or equivalents to cars herein). One format for two-part wheels generally consists of a hub-and-spoke part and a rim base part. Another format generally consists of two rim-pieces; a curb-side (or also referred to as a street-side) rim and a car-side rim, which are attached together to form the wheel. Figure 1 shows a sideview of one example of such a two-part wheel 1. The two-part wheel comprises a car-side rim part 2 and a curb-side rim part 3, wherein a center part 4 (hub and spokes) is carried by the curb-side rim part 3. The center part 4 can be carried by the curb-side rim part 3 by being attached, welded, part-of, or screwed to the curb-side rim part 3. Most commonly the two parts 2, 3 are mounted together by being screwed by screws 5 or glued along an interface portion 6. Generally, the interface portion 6 is a surface where the two rim parts 2, 3 abuts one another when mounted and extends along the circumference of the wheel 1. The interface portion 6 of the wheel 1 has an extension that is orthogonal to the center axis A of the wheel 1. This enables for a large surface for attaching the two rim parts 2, 3.

The exact location of the interface portion 6 - which is defined by the widths of the rim base portions 7, 8 of the two rim parts - depends on the offset of the wheel, i.e. the placement of the center part 4 (hubs and spokes) with regards to the rim base (formed by rim base portions 7 and 8 when mounted).

### SUMMARY

The inventors have realized that an improved two-part wheel can be achieved by providing a car-side rim part carrying the center part and wherein the curb-side rim part is attached to the car-side rim part through an interface portion that extends generally in a direction parallel to a center axis of the wheel.

This construction brings about one advantage in that the center part can be manufactured more easily even when having an intricate design, especially in an automated manner, as the cross-over from the center part to the rim (and more precisely to an outer flange of the rim on the curb-side) of a finished wheel often include extreme angles that can be difficult to get to, and especially to apply fiber sheets (such as carbon fiber sheets) to.

This construction also brings about one advantage in that as the interface portion is substantially parallel to the center axis, it provides for a stronger joining of the two rim parts, which improves both the handling and the robustness of the wheel.

This construction also brings about one advantage in that as the curb-side part only comprises the outer rim-portion and outer flange of the wheel, it is cheaper to replace. As the most common wheel damage occurs when hitting a curb which only affects the outer rim-portion and outer flange of the wheel, and as this is now the least complicated part of the wheel according to herein, the cost to repair a wheel suffering the most common damage is greatly reduced through the teachings herein.

The teachings herein thus provide multi-part wheel comprising a curb-side rim part and a car-side rim part, wherein the curb-side rim part 11 comprises an outer rim-base portion, and the car-side rim part comprises an inner rim-base portion and a center part.

Other embodiments are discussed in the below and also as per the appended claims.

Additional aspects, advantages, features and objects of the present disclosure would be made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and details disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
Figure 1 is a side-view of a prior art wheel;
Figure 2A is a schematic illustration of a wheel in accordance with an embodiment of the teachings herein;
Figure 2B is a schematic illustration of a wheel in accordance with an embodiment of the teachings herein;
Figure 3A is a schematic illustration of a wheel in accordance with an embodiment of the teachings herein;
Figure 3B is a schematic illustration of a wheel in accordance with an embodiment of the teachings herein;
Figure 4 is a schematic illustration of a close-up of a portion of a wheel in accordance with an embodiment of the teachings herein;
Figure 5 is a schematic illustration of a close-up of a portion of a wheel in accordance with an embodiment of the teachings herein; and
Figure 6 is a schematic illustration of a wheel in accordance with an embodiment of the teachings herein.

### DETAILED DESCRIPTION OF THE DRAWINGS

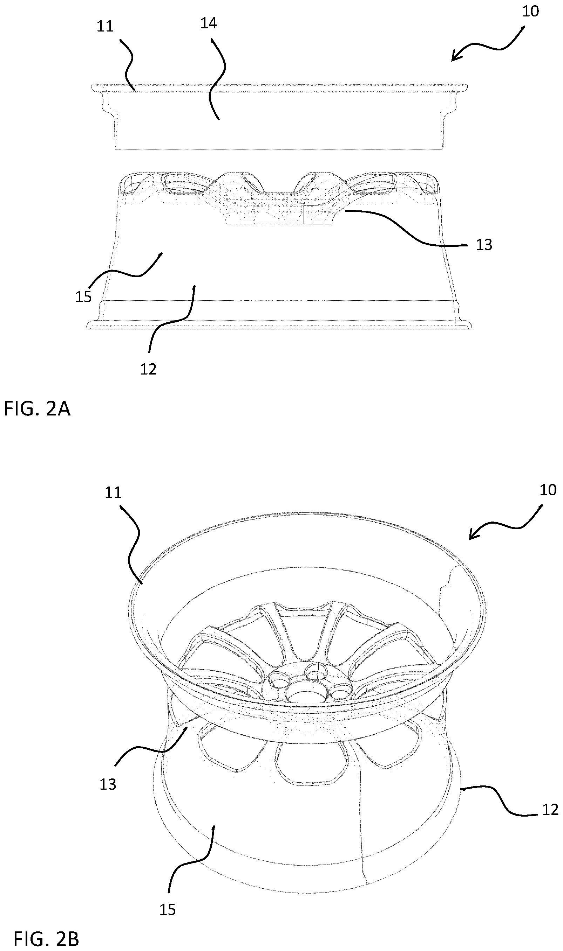

Referring to Figures 2A and 2B, there is illustrated a two-part wheel 10 according to herein, hereafter simply referred to as the wheel. Figure 2A shows a side-view of the wheel 10 and Figure 2B shows a perspective-view of the wheel 10. Reference will be given to both Figures 2A and 2B simultaneously.

The wheel 10 comprises a curb-side rim part 11 and a car-side rim part 12. The curb-side rim part 11 comprises an outer rim-base portion 14, and the car-side rim part 12 comprises an inner rim-base portion 15 and a center part 13. In the examples illustrated herein, the center part 13 comprises the hub (or spider) and the spokes of the wheel 10. However, it should be noted that in some embodiments the hub or any other central part may be an additional part that may be attached to the wheel. In such embodiments the center part comprises the spokes or at least a portion of the spokes. The wheel 10 is thus in some embodiments a multi-part wheel 10.

In some embodiments, and as illustrated in figures 2A and 2B, the center part 13 is an integral part of the car-side rim part 12, i.e. the center part 13 and the car-side rim part 12 are formed as one integral part. This provides for a sturdy construction of the wheel and enables for a good transfer of forces (acceleration, deceleration, turning) during use of the wheel, such as when driving.

In some embodiments the wheel 10 is made of a composite material. In some such embodiments, the composite material is carbon. The construction of the center part 13 being an integral part of the car-side rim part 12 provides for a simplified manufacturing as the composite material for the center part can be applied more easily as the angles between the center part and the rim-base portion 15 are not extreme. Specifically, a mold (not shown) can be easily constructed upon which a composite fiber (such as carbon) can be applied automatically for a wheel according to the teachings herein. And, the fiber can also be applied much more easily to such a mold as the transition from the center part 13 to the rim-base portion 15 is at obtuse (for this purpose including straight) angles - as opposed to acute angles - at least for a main portion of the fiber (sheets or tows) being applied.

In some embodiments the wheel is made of aluminum (or other metal). For such embodiments the teachings herein reduce the need for welding and/or making holes for connection by screws, thereby simplifying the manufacturing.

In some embodiments the wheel 10 is made of a combination of aluminum (or other metal) and a composite material. In some such embodiments, one part (11 or 12) is made of composite material and the other is made of aluminum (or other metal). For example, if the curb-side part 11 is made of aluminum, it will be cheaper to replace if damaged compared to a carbon curb-side portion, while not affecting the look of the wheel too much.

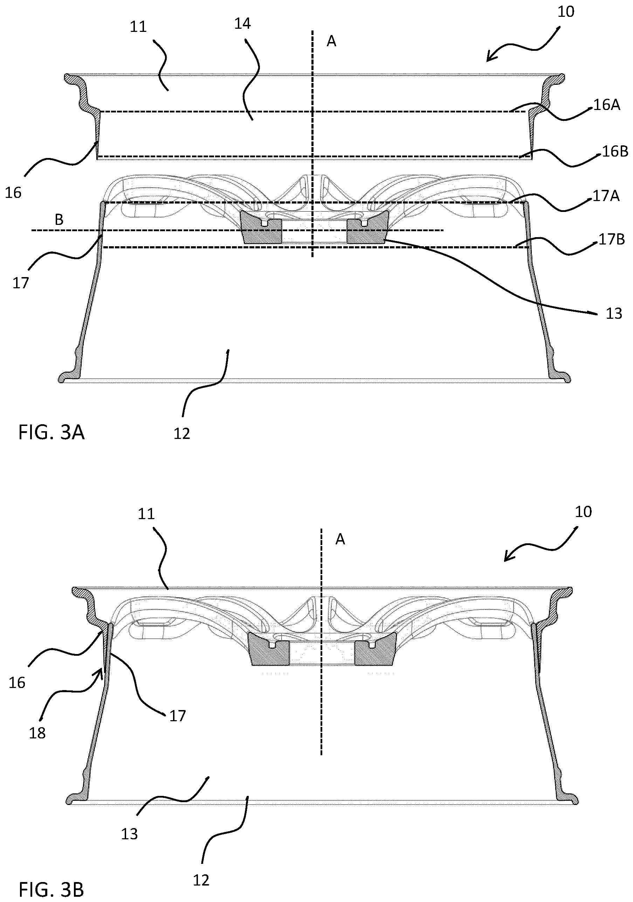

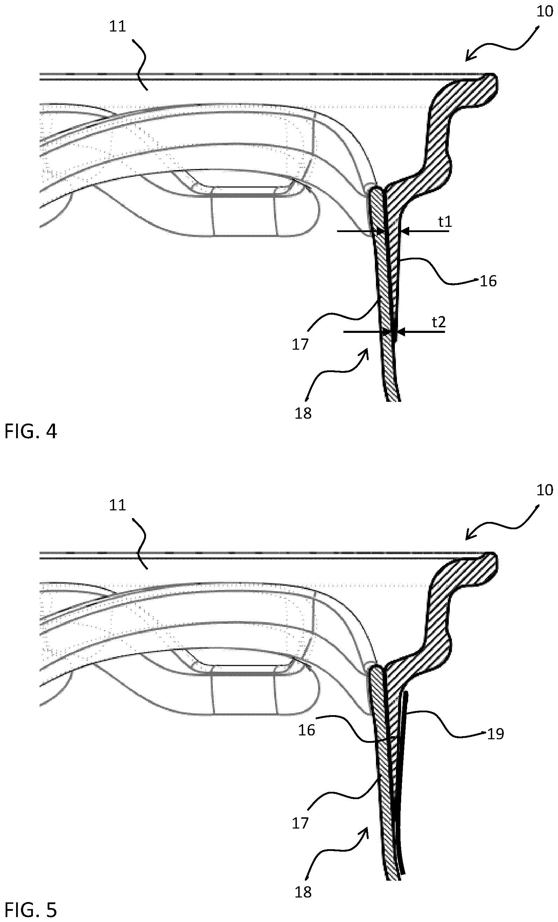

Referring to Figures 3A, 3B and 4, there are illustrated cut-throughs of a wheel 10 according to herein. Figure 3A shows a cut-through side-view of the wheel 10 when the two rim parts 11, 12 are separated, and Figure 3B shows a cut-through side-view of the wheel 10 when the two rim parts 11, 12 are joined. Figure 4 shows a close-up of a portion of the view of figure 3B. Reference will be given to Figures 3A, 3B and 4 simultaneously.

Each rim part 11, 12 has an interface portion 16, 17, i.e. a curbside interface portion 16 and a car-side interface portion 17) that when joined together form an interface portion 18 for the wheel 10. As can be seen the interface portions 16, 17 (and thereby also the interface portion 18 of the wheel 10) extend in a direction substantially parallel to a center axis A of the wheel 10. Moste notable, the interface portion 18 does not extend in a direction orthogonal to the center axis.

In some embodiments the interface portion 18 is straight. In some embodiments the interface portion 18 is bent or curved depending on the design of the wheel 10. In such bent or curved embodiments an angle of the direction will be that of an average angle of a tangent along the interface portion 18 in some embodiments. In some embodiments, the angle will be that of a line cutting through and along with the interface portion 18. The interface portion 18 can thus be approximated to have a straight extension.

In some embodiments the interface portion 18 extends in a direction that is within +/- 10 degrees relative the center axis A. In some embodiments the interface portion 18 extends in a direction that is within +/- 5 degrees relative the center axis A. In some embodiments the interface portion 18 extends in a direction that is within +/- 3 degrees relative the center axis A. In some embodiments the interface portion 18 extends in a direction that is within +/- 2 degrees relative the center axis A.

In some embodiments the curb-side rim part 11 and the car-side rim part 12 are joined together through pressure fit, wherein the joint may be reinforced through heat bonding.

In some embodiments the curb-side rim part 11 and the car-side rim part 12 are joined together through heat bonding.

In some embodiments the curb-side rim part 11 and the car-side rim part 12 are joined together through being glued together using an adhesive. In some embodiments the joint is reinforced through pressure fit. In some embodiments the joint is reinforced through heat bonding. In some embodiments the joint is reinforced through pressure fit and heat bonding.

As the interface portion 18 extends circumferentially around the wheel 10, it will be enabled to absorb forces that the wheel 10 is subjected to in a direction of travel.

In some embodiments, and as illustrated in figures 3A, 3B and 4, the interface portion 18 (and specifically the interface portion 17 of the car-side rim part 12, but possibly also the interface portion 16 of the curb-side part 11) has a conical shape (or rather a truncated cone). This has the benefit that when joining using an adhesive, the application of the adhesive is simplified. In some embodiments, the adhesive can be applied to a main portion of either of the interface portions 16, 17. In some embodiments, the adhesive can be applied to an initial portion of either of the interface portions 16, 17, wherein the initial portion is the portion of the interface portion 16, 17 that comes first into contact with each other when joining. The conical shape prevents or reduces the risk of the adhesive being scraped off or pushed away from the interface portion, and thus enable for spreading the adhesive evenly over the interface portions 16, 17.

In some embodiments the curb-side interface portion 16 thus has an outer (first) diameter 16A that is smaller than an inner (second) diameter 16B, where inner-outer is seen relative the center axis and where the curb-side is outside the car-side.

In some embodiments the curb-side interface portion 16 has an inner surface which slopes at an angle a. In some embodiments the angle a is 5-10 degrees, in some embodiments the angle a is 6-8 degrees, and in some embodiments the angle a is 7 degrees.

Similarly in some embodiments, the car-side interface portion 17 has an outer (first) diameter 17A that is smaller than an inner (second) diameter 17B. In some embodiments the outer diameter is 99% of the inner diameter. In some embodiments the outer diameter is 98-99% of the inner diameter. In some embodiments the outer diameter is 95-99% of the inner diameter. In some embodiments the outer diameter is 90-99% of the inner diameter. In some embodiments the outer diameter is 80-90% of the inner diameter.

In some embodiments, the interface portion 18 has an extension parallel to the center axis that is more than 10 % of the width of the wheel 10.

In some embodiments, the interface portion 18 has an extension parallel to the center axis that is more than 15 % of the width of the wheel 10. In some embodiments, the interface portion 18 has an extension parallel to the center axis that is 15 - 30 % of the width of the wheel 10. In some embodiments, the interface portion 18 has an extension parallel to the center axis that is 20 - 30 % of the width of the wheel 10. In some embodiments, the interface portion 18 has an extension parallel to the center axis that is 25 - 35 % of the width of the wheel 10. In some embodiments, the interface portion 18 has an extension parallel to the center axis that is 35 - 45 % of the width of the wheel 10. The same measurements apply for the interface portions 16 and 17, where those interface portions may be larger by a margin of 5%, 10% or in any range thereinbetween.

In some embodiments, the interface portion 18 has an extension parallel to the center axis that is in the range 40-60 mm, optionally depending on the size of the wheel.

In some embodiments the interface portion 16 of the curb-side rim part 11 has a tapered shape wherein an outer (first) thickness t1 is greater than an inner (second) thickness t2, and in some embodiment the curb-side interface portion 16 tapers off (inner thickness t2 -> 0 or rounded off as would be understood to be included in the terminology of tapering off by a skilled person). In some embodiments the smallest thickness of the curb-side interface portion 16 is 1, 1.25, 1.5, 1.75 or 2 mm.

However, in some embodiments, the car-side interface portion 17 does not taper. This provides additional robustness to the wheel as the car-side portion attaches to the wheel bolts.

In some embodiments the interface portion 18 is arranged over or substantially adjacent where the spokes extend from the car-side part 12 and towards the hub, as seen in figure 3A for example. As can be seen in figure 3A, the interface portion 18 is in line with or overlaps the center of the hub as indicated by the plane B in figure 3A. The interface portion 18 thus overlaps the plane intersecting the (center of the) hub. This allows for the powers generated through driving the wheel to be absorbed by the interface portion, i.e. in some embodiments the glued portion whereby skewing forces can be absorbed in an improved manner.

This thus enables for the curb-side interface portion 16 to flex, which allows it to follow the car-side interface portion 17 in situations where the wheel 10 is subjected to forces (temporarily) deforming the wheel 10, such as the car-side interface portion 17. This allows the wheel 10 to absorb forces that the wheel is subjected to in many directions, where prior art wheels may have com-apart as a result of one part being deformed.

This also allows for different sizes of wheels to be provided using the same car-side portion but with curb-side portions of different widths to be used (or vice-versa), whereby the offset of the wheel is changed. This thus provides for great flexibility when manufacturing wheels.

In some embodiments the outer thickness is more than one and a half times the inner thickness. In some embodiments the outer thickness is more than two times the inner thickness. In some embodiments the outer thickness is more than three times the inner thickness.

In some embodiments the outer thickness t1 is more than 4 mm. In some embodiments the outer thickness t1 is more than 6 mm. In some embodiments the outer thickness t1 is more than 8 mm. In some embodiments the outer thickness t1 is more than 10 mm.

In some embodiments the inner thickness t2 is less than 4 mm. In some embodiments the inner thickness t2 is less than 2 mm. In some embodiments the inner thickness t2 is less than 1 mm. In some embodiments the inner thickness t2 tapers off to zero or substantially zero.

Any of these embodiments can be combined with one another as regards combining thicknesses for t1 and t2.

In some embodiments the adhesive used for the interface portion 18 is high-temperature, two-part adhesive, such as an epoxy or an acrylic adhesive.

The two-part wheel is also easy to disassemble, where the curb-side portion 11 is removed from the car-side portion thereby separating the wheel. This can be done by heating the wheel, and especially the interface portion 18, thereby dissolving the adhesive. Alternatively, the curb-side portion 11 is removed from the car-side portion 12 by grinding it.

It should be noted that in some embodiments the curb-side portion 11 is joined to or attached to the car-side portion 12 through lamination. The lamination can be used as an alternative to the adhesive or as a supplement to the adhesive.

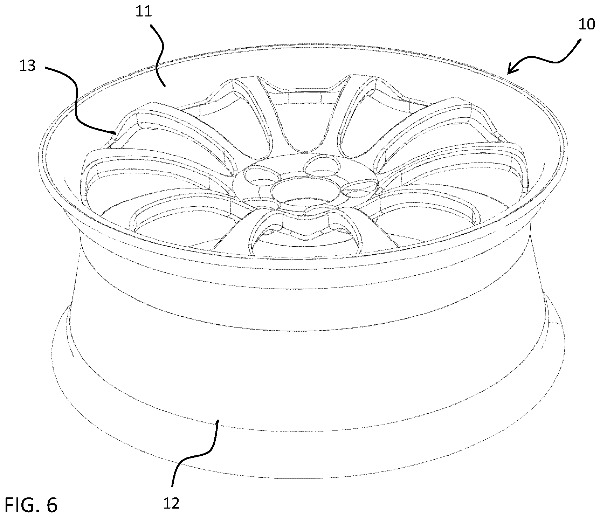

Figure 6 shows a perspective view of a part of a wheel 10 where the curb-side rim part 11 has been joined to the car-side rim part 12 utilizing a laminate 19.

Figure 6 shows a perspective view of a wheel 10 where the curb-side rim part 11 has been joined to the car-side rim part 12. As can be seen, the wheel may be designed with intricate details while still providing a sturdy construction able to absorb forces in any direction that the wheel 109 is subjected to during use.

As can be seen, all of figures 2A, 2B, 3A, 3B, 4, 5 and 6 show views of the same example wheel 10. It should thus be apparent to a skilled person that all embodiments discussed herein may be combined freely even if discussed with reference to different figures. However, it should also be understood that all embodiments need not be combined as many options and alternatives exist depending on the design chosen.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A multi-part wheel (10) comprising a curb-side rim part (11) and a car-side rim part (12), wherein the curb-side rim part (11) comprises an outer rim-base portion (14), and the car-side rim part (12) comprises an inner rim-base portion (14) and a center part (4).

2. The multi-part wheel (10) according to claim 1, wherein the center part (4) comprises at least a portion of spokes.

3. The multi-part wheel (10) according to claim 2, wherein the center part (4) comprises a hub and the spokes.

4. The multi-part wheel (10) according to claim 1, wherein the multi-part wheel (10) further comprises a hub that is to be attached to the center part (4) to form part of the center part (4).

5. The multi-part wheel (10) according to any preceding claim, wherein the center part (4) is an integral part of the car-side rim part (12).

6. The multi-part wheel (10) according to any preceding claim, wherein each rim part (11, 12) has an interface portion (16, 17) that when joined together form an interface portion (18) for the wheel (10), and wherein the interface portion (18) extend in a direction substantially parallel to a center axis (A) of the wheel (10).

7. The multi-part wheel (10) according to claim 6, wherein the interface portion (18) does not extend in a direction orthogonal to the center axis (A).

8. The multi-part wheel (10) according to claim 6 or 7, wherein the interface portion (18) extends in a direction that is within +/- 10 degrees, +/- 5, +/- 3 degrees relative the center axis A, or within +/- 2 degrees relative the center axis A.

9. The multi-part wheel (10) according to claim 6, 7 or 8, wherein the extension parallel to the center axis (A) of the interface portion (18) is more than 10 %, more than 15 %, 15 - 30 %, 20 - 30 %, 25 - 35 % of a width of the wheel (10).

10. The multi-part wheel (10) according to any preceding claim, wherein the interface portion (17) of the car-side rim part (12) has a shape of a truncated cone.

11. The multi-part wheel (10) according to claim 10, wherein the car-side interface portion (17) has an outer diameter (17A) that is smaller than an inner diameter (17B).

12. The multi-part wheel (10) according to claim 10 or 11, wherein the interface portion (18) has a shape of a truncated cone and wherein the curb-side interface portion (16) has an outer diameter (16A) that is smaller than an inner (second) diameter (16B).

13. The multi-part wheel (10) according to any preceding claim, wherein the interface portion (16) of the curb-side rim part (11) has a tapered shape, wherein an outer thickness (t1) is greater than an inner thickness (t2).

14. The multi-part wheel (10) according to any preceding claim, wherein the wheel (10) is made of a composite material.

15. The multi-part wheel (10) according to any preceding claim, wherein curb-side rim part (11) and the car-side rim part (12) are joined together through being glued together using an adhesive, or wherein the curb-side rim part (11) and the car-side rim part (12) have been joined together through pressure fit and/or through heat bonding.
